# EUROPEAN PATENT SPECIFICATION

(11) **EP 2 563 742 B1**
(45) Date of publication and mention of the grant of the patent: **21.10.2020**
(21) Application number: 11719394.6
(22) Date of filing: 19.04.2011
(51) Int. Cl.: C04B 38/00, C04B 35/636, C08L 1/28, C04B 35/195

(54) **COMPOSITION FOR EXTRUSION-MOLDED BODIES**
ZUSAMMENSETZUNG FÜR STRANGGEPRESSTE KÖRPER
COMPOSITION POUR DES CORPS MOULÉS PAR EXTRUSION

(30) Priority: 26.04.2010 US 328018 P
(43) Date of publication of application: 06.03.2013
(73) Proprietor: Dow Global Technologies LLC, Midland, MI 48674 (US)
(72) Inventor: BAYER, Roland, 29664 Walsrode (DE)
(74) Representative: f & e patent
(86) International application number: PCT/US2011/033043
(87) International publication number: WO 2011/136979

(56) References cited:
- EP-A1- 1 445 278
- EP-A1- 1 506 973
- EP-A2- 0 488 060
- EP-A2- 1 870 389
- JP-B- 7 055 850

## Description

### Field

This invention relates to a composition for extrusion-molded bodies and a method for producing them.

### Background

Extrusion molding of inorganic masses, such as ceramic-forming materials has been performed by passing a green body or composition, which is obtained by mixing and kneading molding aids such as organic binders, surfactants, lubricants, and plasticizers with inorganic materials, particularly ceramic-forming materials, through dies having a desired shape into a sheet, a bar, a hollow tube, a rectangular column, a hollow rectangular column, or a honeycomb structure. In particular, the extrusion-molded body in the form of ceramic honeycombs has been in use as a carrier for exhaust gas cleaning catalysts, filters, and heat exchangers in the fields of automobiles and various industries.

U.S. Patent No. 4,551,295 relates to the extrusion of a plastic ceramic batch into articles of widely-differing profiles and shapes such as, for example, dinnerware and electrical insulators, and especially the extrusion of thin-walled honeycomb structures from ceramic batches capable of flowing or plastically deforming under pressure during extrusion. The U.S. patent discusses that a methyl cellulose, such as METHOCEL™ A4M cellulose ether having a viscosity of 4000 mPa·s, measured as a 2 wt.% aqueous solution at 20°C according to Ubbelohde has a low gelation temperature. According to Fig. 8 of the U.S. patent a sharp rise in extrusion pressure is observed when increasing the extrusion temperature in the range of 23 - 30°C. The U.S. patent discusses that such rise in extrusion pressure is not observed when using as a binder/plasticizer METHOCEL™ F4M cellulose ether which is commercially available from The Dow Chemical Company and has a viscosity of 4000 mPa·s. METHOCEL™ F4M cellulose ether has a methoxyl substitution of 27-30 weight percent and a hydroxypropoxyl substitution of 4.0 - 7.5 weight percent. The U.S. patent suggests using a hydroxypropyl cellulose having a viscosity of 25,000 - 100,000 mPa·s, measured as a 2 wt.% aqueous solution at 20°C according to Ubbelohde to permit the use of working temperatures greater than 35°C in a twin screw extrusion apparatus.

The International patent application WO 2008/077451 discloses a process for the extrusion of ceramic masses wherein ceramic masses are mixed with a cellulose ether, such as Walocel™ M-20678 cellulose ether, which is a hydroxyethyl methyl cellulose which has a viscosity of 10,400 - 12,400 mPa·s, measured as 1 wt.% aqueous solution in water using a Haake Rotovisko RV 100 at a shear rate 2.55 s⁻¹ at 20°C, with a plasticizer, such as a polycarboxylate ether, and with a defoamer, such as a polyether.

European patent application EP 2 157 064 A2 discloses that cellulose ethers are used in compositions for ceramic extrusion-molded bodies as an organic binder because of their excellent plasticity, water retention and thermal gelation characteristics. EP 2 157 064 A2 discusses that these cellulose ethers are disadvantageous in that they increase in frictional force with the die portion during extrusion molding and thus, the extrusion temperature rises owing to this frictional resistance. EP 2 157 064 A2 suggests solving this problem by additionally incorporating a styrenesulfonate in ceramic compositions comprising a ceramic material and a water-soluble cellulose ether for extrusion molding to enable extrusion molding at high temperatures and thus increasing the extrusion molding speed.

The International patent application WO2007/047103 relates to the use of an organic binder system which comprises an organic lubricant, such as a monocarboxylic acid like stearic acid, grafted to a cellulose ether binder, such as methylcellulose or hydroxypropyl methylcellulose like Methocel™ A4M and 20-333 and Methocel™ F240 available from The Dow Chemical Company. EP1870389 discloses an extrusion or injection molding composition comprising water-insoluble particles, a water-soluble binder, and water used for preparing a molded part, e.g. honeycomb structure. The water-soluble binder comprises water-soluble methyl cellulose, hydroxypropyl methyl cellulose, hydroxyethyl methyl cellulose, hydroxyethyl ethyl cellulose, hydroxyethyl cellulose, or hydroxypropyl cellulose.

Unfortunately, the use of styrenesulfonate or of cellulose ether binders to which a monocarboxylic acid has been grafted significantly increases the costs of compositions for extrusion-molded bodies.

Accordingly, it would be desirable to provide new compositions for extrusion-molded bodies which can be extruded at a reasonably low extrusion pressure. Technical and economic disadvantages of high extrusion pressures make operation of the extruders prematurely uneconomical due to high wear or high power costs.

### Summary of Invention

One aspect of the present invention is a composition for extrusion-molded in form of a paste comprising
a) an inorganic material that sets as a result of baking or sintering,
b) a methylhydroxyethyl cellulose having a DS(methyl) of from 1.50 to 1.90, an MS(hydroxyethyl) of from 0.30 to 0.90 and a sum of the DS(methyl) and the MS(hydroxyethyl) of from 2.00 to 2.60, and
c) water
   wherein the inorganic material is an aluminate, aluminosilicate, alumina silica, feldspar, titania, fused silica, aluminum nitride, aluminum carbide, kaolin, cordierite, mullite, clay, bentonite, talc, zircon, zirconia, spinel, silicon carbide, silicon boride, silicon nitride, titanium dioxide, titanium carbide, boron carbide, boron oxide, borosilicate, soda barium borosilicate, a silicate, a sheet silicate, soda lime, zeolite, barium titanate, lead titanate zirconate, aluminium titanate, barium ferrite, strontium ferrite, a rare earth oxide, or a combination of two or more of such inorganic materials; wherein the composition does not include hydraulic binders and wherein the composition comprises from 85 to 99.5 percent of the inorganic material a) and 0.5 to 15 percent of methylhydroxyethyl cellulose b) based on the total weight of the inorganic material a) and the methylhydroxyethyl cellulose b).

Another aspect of the present invention is the use of the above-mentioned methylhydroxyethyl cellulose for reducing the pressure in an extrusion-molding process for manufacturing an extrusion-molded body.

Yet another aspect of the present invention is a method for manufacturing an extrusion-molded body which comprises the steps of mixing an inorganic material, the above-mentioned methylhydroxyethyl cellulose, water and optional additives to provide an extrudable mass and subjecting the extrudable mass to extrusion molding, drying and sintering.

Yet another aspect of the present invention is an extrusion-molded body produced from the above-mentioned composition being a green body.

Yet another aspect of the present invention is the use of the above-mentioned extrusion-molded body as a carrier for a catalyst, as a catalyst, a heat exchanger, or a filter.

### Description of Embodiments

It has been surprisingly found that compositions which are used for extrusion-molded bodies can be extruded at a lower extrusion pressure when they comprise a methylhydroxyethyl cellulose having a DS(methyl) of from 1.5 to 1.9, an MS(hydroxyethyl) of from 0.30 to 0.90 and a sum of the DS(methyl) and the MS(hydroxyethyl) of from 2.00 to 2.60 instead of methylcelluloses or methylhydroxyethyl celluloses which have been previously used in compositions for extrusion-molded bodies. The degree of the methyl substitution, DS (methyl), of a cellulose ether is the average number of substituted OH groups per anhydroglucose unit (AGU). The degree of the hydroxyethyl substitution is described by the MS (molar substitution). The MS (hydroxyethyl) or MS (HE) is the average number of moles of the etherification reagent ethylene oxide which are bound by an ether bond per mole of anhydroglucose unit. The determination of the DS (methyl) is carried out according to ASTM D3876-96 (Reapproved 2001). The determination of the MS (hydroxyethyl) is carried out according to ASTM D4794-94 (Reapproved 1998). According to these methods the methoxyl and hydroxyethyl substitution content is obtained in percent (%), from which the DS(methyl) and the MS (hydroxyethyl) can be calculated, as known by the skilled artisans.

The methylhydroxyethyl cellulose has a MS(hydroxyethyl) of from 0.30 to 0.90, preferably of from 0.30 to 0.70. Preferably the sum of the DS(methyl) and the MS(hydroxyethyl) is at least 2.10, more preferably at least 2.20. The sum of the DS(methyl) and the MS(hydroxyethyl) is up 2.60.

The viscosity of the methylhydroxyethyl cellulose generally is from 300 to 200,000 mPa·s, more preferably from 400 to 100,000 mPa·s, determined in a 2% by weight aqueous solution at 20°C in a Haake VT550 Viscotester at 20°C and at a shear rate of 2.55 s⁻¹.

The composition for extrusion-molded bodies is a mass which sets as a result of baking or sintering. Masses which set as a result of baking or sintering do not include hydraulic binders such as cement or gypsum and do not include masses based on cement or gypsum.

The inorganic materials are an aluminate, aluminosilicate, alumina silica, feldspar, titania, fused silica, aluminum nitride, aluminum carbide, kaolin, cordierite, mullite, clay, bentonite, talc, zircon, zirconia, spinel, silicon carbide, silicon boride, silicon nitride, titanium dioxide, titanium carbide, boron carbide, boron oxide, borosilicate, soda barium borosilicate, silicates and sheet silicates, soda lime, zeolite, barium titanate, lead titanate zirconate, aluminium titanate, barium ferrite, strontium ferrite, a rare earth oxides, or a combination of two or more of such inorganic materials. The term "clay" means a hydrated aluminum silicate having a platy structure and forms plastic masses when mixed with water. Typically, clays are comprised of one or more crystalline structures such as kaolins, illites and smectites. Preferred oxides are those that form cordierite or mullite when mixed with clay (e.g., silica and talc for forming cordierite and alumina when forming mullite).

The composition for extrusion-molded bodies comprises from 85 to 99.5 percent, more preferably from 90 to 99.3 percent, most preferably from 92 to 99 percent of the inorganic material a) and from 0.5 to 15 percent, more preferably from 0.7 to 10 percent, most preferably from 1 to 8 percent of the methylhydroxyethyl cellulose b), based on the total weight of the inorganic material a) and the methylhydroxyethyl cellulose b).

The composition of the present invention is in the form of a paste. Generally it comprises a diluent which is liquid at 25 °C and provides a medium for the methylhydroxyethyl cellulose to dissolve in thus providing plasticity to the batch and wetting of the powders. The liquid diluent can be aqueous based, which are normally water or water-miscible solvents; or organically based or a mixture thereof. Most preferably water is used. The composition for extrusion-molded bodies preferably comprises from 10 to 60 weight parts, more preferably from 20 to 50 weight parts, most preferably from 15 to 40 weight parts of the liquid diluent per 100 weight parts of the inorganic material a).

The composition of the present invention may further comprise other additives such as surfactants, lubricants and pore-forming materials.

Non- limiting examples of surfactants that can be used in the practice of the present invention are C₈ to C₂₂ fatty acids and/or their derivatives. Additional surfactant components that can be used with these fatty acids are C₈ to C₂₂ fatty esters, C₈ to C₂₂ fatty alcohols, and combinations of these. Exemplary surfactants are stearic, lauric, oleic, linoleic, palmitoleic acids, and their derivatives, stearic acid in combination with ammonium lauryl sulfate, and combinations of all of these. Most preferred surfactants are lauric acid, stearic acid, oleic acid, and combinations of these. The amount of surfactants typically may be from 0.5 to 3 percent, based on the weight of the inorganic material a).

Non-limiting examples of lubricants are for example polyethylene oxide homopolymers, copolymers and terpolymers, glycols, or oil lubricants, such as light mineral oil, corn oil, high molecular weight polybutenes, polyol esters, a blend of light mineral oil and wax emulsion, a blend of paraffin wax in corn oil, and combinations of these. Typically, the amount of oil lubricants may be from 0.1 to 10 percent, more typically from 0.3 to 6 percent, based on the weight of the inorganic material a).

In filter applications, such as in diesel particulate filters, it is customary to include a burnout pore-forming material in the mixture in an amount effective to subsequently obtain the porosity required for efficient filtering. A burnout pore-forming material is any particulate substance (not a binder) that burns out of the green body in the firing step. Some types of burnout agents that can be used, although it is to be understood that the invention is not limited to these, are non-waxy organics that are solid at room temperature, elemental carbon, and combinations of these. Some examples are polyacrylates, polymethacrylates, graphite, carbon black, cellulose or flour. Elemental particulate carbon is preferred. Graphite is especially preferred. Other useful pore-forming materials are fibers, such as fibers based on cellulose, bamboo, coconut, polyethylene, polypropylene, polyamide, polyacrylonitrile, carbon, glass, ceramic and other mineral fibers. Typically, the amount of pore-forming materials may be from 5 to 60 percent, more typically from 10 to 50 percent, based on the total weight of the inorganic material a).

Uniform mixing of the inorganic material a), the methylhydroxyethyl cellulose b), typically a liquid diluent and optionally other additives such as surfactants, lubricants and pore-forming materials can be accomplished by, for example, a known conventional kneading process. The resulting extrudable composition for extrusion-molded bodies is usually stiff and uniform. It can then be shaped into a green body by any known conventional ceramic extrusion process. In an exemplary aspect, extrusion can be done using a hydraulic ram extrusion press, or a two stage de-airing single auger extruder, or a twin screw extruder with a die assembly attached to the discharge end. The prepared green body can then be dried to remove excess moisture. The drying can be performed by hot air, or steam or dielectric drying, which can be followed by air drying. Once dried, the green body can thereafter be fired under conditions effective to convert the green body into a sintered article according to known techniques. The firing conditions of temperature and time depend on the composition and size and geometry of the body, and the invention is not limited to specific firing temperatures and times. Typical temperatures are from 600 °C to 2300°C, and the holding times at these temperatures are typically from 1 hour to 20 hours.

The extrusion-molded bodies according to the present invention can have any convenient size and shape. They find use in a number of applications such as carriers for catalysts, as catalysts, heat exchangers, or filters, for example as diesel particulate filters, molten metal filters and regenerator cores. In a preferred aspect, the composition and the method of the present invention is well suited for the production of cellular bodies such as honeycombs. These cellular ceramic bodies are particularly useful as carriers for catalysts or as catalyst filters for exhaust gas treatment.

Generally honeycomb densities range from about 15 cells/cm² to about 235 cells/cm². Typical wall thicknesses are from 0.05 to 0.65 mm. It should however be understood that the particular desired size and shape of the ceramic body can depend on the application, e.g., in automotive applications by engine size and space available for mounting. Although the extrusion-molded bodies of the instant invention are, in one aspect, suitable for preparing thin-walled honeycombs, the claimed mixtures can also be used for thicker walled structures. For example, honeycombs structures having 15 to 30 cells/cm² and 0.30 to 0.64 mm wall thicknesses are well suited for diesel particulate filter applications.

The methylhydroxyethyl cellulose described herein is useful for reducing the pressure in extrusion-molding processes which are used for manufacturing extrusion-molded bodies. It has been surprisingly found that compositions which are used for extrusion-molded bodies can be extruded at a lower extrusion pressure when they comprise the above described methylhydroxyethyl cellulose than when the extrusion-molded bodies comprise a methylcellulose or methylhydroxyethyl cellulose which has been used according to the prior art in such compositions.

### Examples 1-4 and Comparative Examples A - G

The present invention is further illustrated by the following examples which are not to be construed to limit the scope of the invention. Unless otherwise mentioned, all parts and percentages are by weight.

### Procedure for the extrusion experiments to make extruded ceramics

100 parts by weight of a cordierite formulation consisting of cordierite CP 820M (Imerys Tableware, Germany) and 2 parts by weight (based on 100 parts by weight of cordierite formulation) of a cellulose ether listed in Table 1 below were firstly mixed dry in a fluidized-bed mixer (manufactured by Lödige, Germany) until a homogeneous mixture was formed. 30.5 parts of water at 20°C (based on 100 parts by weight of cordierite) were subsequently added; the mass was mixed further and kneaded in a kneader (manufactured by AMK, Aachen, Germany) for a few minutes. The mass was then immediately introduced into the feed trough of a water-cooled, single-screw extruder (Händle PZVE 8D, screw diameter 8 cm, from Händle, Mühlacker, Germany). The mass was extruded through a perforated plate and passed through a vacuum chamber for degassing. It was strained (i.e. pressed through a screen having a mesh size of 0.3 mm in order to free the mass of aggregates) for 30 minutes. Then the paste was extruded at room temperature for a few minutes with material recirculation until the pressure reached a constant value. Then the paste was extruded with a screw speed of 15 rpm.through an honeycomb profile of a cell density of 47 cells/cm² (300 cells per square inch) and discharged onto a conveyor belt.

The resulting extrusion pressure listed in Table 1 is the pressure measured just before passage of the mass through the die. It was measured in bar.

The resulting temperatures of the extruded profile were measured and were all 30°C.

**Table 1**

| Comp. Example | Cellulose ether type | Measured DS/MS | Viscosity (mPas) | Temperature during extrusion (°C) | Resulting extrusion pressure (bar/[MPa]) |
|---|---|---|---|---|---|
| 1 | HEMC* | 1.8/0.35 | 4800 | 30 | 26/[2.6] |
| 2 | HEMC | 1.83/0.57 | 4300 | 30 | 26/[2.5] |
| 3 | HEMC | 1.61/0.6 | 4400 | 30 | 28/[2.8] |
| 4 | HEMC | 1.57/0.58 | 4000 | 30 | 31/[3.1] |
| A | HEMC | 1.48/029 | 3600 | 30 | 33/[3.3] |
| B*** | HEMC | 1.78/0.16 | 5000 | 30 | 33/[3.3] |
| C*** | HEMC | 1.57/0.34 | 4200 | 30 | 34/[3.4] |
| D*** | HEMC | 1.56/0.28 | 4000 | 30 | 35/[3.5] |
| E*** | HEMC | 1.46/0.17 | 4400 | 30 | 41/[4.1] |
| F | MC** | 1.61/0 | 4400 | 30 | 35/[3.5] |
| G | MC | 1.78/0 (Methocel™ A4M) | 6800 | 30 | 33/[3.3] |

| | | | | | |
|---|---|---|---|---|---|
| *HEMC: methylhydroxyethyl cellulose **MC: methylcellulose *** Comparative Example, but not prior art | | | | | |

The results in Table 1 illustrate that the composition of the present invention which comprises a methylhydroxyethyl cellulose being substituted with methyl and hydroxyethyl groups as claimed herein can be extruded at a significantly lower extrusion pressure than compositions that comprise a methylcellulose or methylhydroxyethyl cellulose with another DS(methyl) and MS(hydroxyethyl).

## Claims

1. A composition for extrusion-molded bodies in form of a paste comprising
a) an inorganic material that sets as a result of baking or sintering,
b) a methylhydroxyethyl cellulose having a DS(methyl) of from 1.50 to 1.90, an MS(hydroxyethyl) of from 0.30 to 0.90 and a sum of the DS(methyl) and the MS(hydroxyethyl) of from 2.00 to 2.60, and
c) water
wherein the inorganic material is an aluminate, aluminosilicate, alumina silica, feldspar, titania, fused silica, aluminum nitride, aluminum carbide, kaolin, cordierite, mullite, clay, bentonite, talc, zircon, zirconia, spinel, silicon carbide, silicon boride, silicon nitride, titanium dioxide, titanium carbide, boron carbide, boron oxide, borosilicate, soda barium borosilicate, a silicate, a sheet silicate, soda lime, zeolite, barium titanate, lead titanate zirconate, aluminium titanate, barium ferrite, strontium ferrite, a rare earth oxide, or a combination of two or more of such inorganic materials; wherein the composition does not include hydraulic binders and wherein the composition comprises from 85 to 99.5 percent of the inorganic material a) and 0.5 to 15 percent of methylhydroxyethyl cellulose b) based on the total weight of the inorganic material a) and the methylhydroxyethyl cellulose b).

2. The composition of claim 1 wherein the methylhydroxyethyl cellulose has a MS(hydroxyethyl) of from 0.30 to 0.70.

3. The composition of claim 1 or claim 2 wherein the sum of the DS(methyl) and the MS(hydroxyethyl) is at least 2.10.

4. A method for manufacturing an extrusion-molded body, comprising the steps of mixing an inorganic material set forth in claim 1, a methylhydroxyethyl cellulose set forth in any one of claims 1 to 3, water and optional additives to provide an extrudable mass and subjecting the extrudable mass to extrusion molding, drying and sintering.

5. An extrusion-molded body produced from the composition of any one of claims 1 to 3 being a green body.

6. The extrusion-molded body of claim 5 having a ceramic honeycomb structure.

7. Use of the extrusion-molded body of claim 5 or 6 as a carrier for a catalyst, as a catalyst, a heat exchanger, or a filter.

8. Use of claim 7 as a carrier for a catalyst or a catalyst filter for exhaust gas treatment.

## Patentansprüche

1. Zusammensetzung für extrusionsgeformte Körper in Form einer Paste, enthaltend:
a) ein anorganisches Material, das als Folge von Erhitzen oder Sintern härtet,
b) eine Methylhydroxyethylcellulose mit einem DS(Methyl) von 1,50 bis 1,90, einem MS(Hydroxyethyl) von 0,30 bis 0,90 und einer Summe des DS(Methyl) und des MS(Hydroxyethyl) von 2,00 bis 2,60 und
c) Wasser,
wobei das anorganische Material ein Aluminat, Aluminosilicat, Aluminiumoxid, Siliciumdioxid, Feldspat, Titandioxid, Quarzglas, Aluminiumnitrid, Aluminiumcarbid, Kaolin, Cordierit, Mullit, Ton, Bentonit, Talk, Zircon, Zircondioxid, Spinell, Siliciumcarbid, Siliciumborid, Siliciumnitrid, Titandioxid, Titancarbid, Borcarbid, Boroxid, Borosilicat, Natriumbariumborosilicat, ein Silicat, ein Blattsilicat, Natronkalk, Zeolith, Bariumtitanat, Bleititanat, Zirconat, Aluminiumtitanat, Bariumferrit, Strontiumferrit, ein Seltenerdoxid oder eine Kombination von zwei oder mehr solcher anorganischen Materialien ist, wobei die Zusammensetzung keine hydraulischen Bindemittel enthält und wobei die Zusammensetzung 85 bis 99,5 Gew.-% eines anorganischen Materials a) und 0,5 bis 15 Gew.-% der Methylhyxdroxyethylcellulose b), bezogen auf das Gesamtgewicht des anorganischen Materials a) und der Methylhydroxyethylcellulose b), enthält.

2. Zusammensetzung nach Anspruch 1, wobei die Methylhydroxyethylcellulose einen MS(Hydroxyethyl) von 0,30 bis 0,70 aufweist.

3. Zusammensetzung nach Anspruch 1 oder Anspruch 2, wobei die Summe des DS(Methyl) und des MS(Hydroxyethyl) wenigstens 2,10 beträgt.

4. Verfahren zur Herstellung eines extrusionsgeformten Körpers, umfassend die Schritte des Mischens von einem anorganischen Material wie in Anspruch 1 definiert, einer Methylhydroxyethylcellulose wie in einem der Ansprüche 1 bis 3 definiert, Wasser und optionalen Additiven, um eine extrudierbare Masse bereitzustellen, und Unterziehen der extrudierbaren Masse einer Extrusionsformgebung, Trocknen und Sintern.

5. Extrusionsgeformter Körper, hergestellt aus der Zusammensetzung nach einem der Ansprüche 1 bis 3, der ein Grünkörper ist.

6. Extrusionsgeformter Körper nach Anspruch 5 mit einer keramischen Honigwabenstruktur.

7. Verwendung eines extrusionsgeformten Körpers nach einem der Ansprüche 5 oder 6 als Träger für einen Katalysator, als ein Katalysator, ein Wärmetauscher oder ein Filter.

8. Verwendung nach Anspruch 7 als Träger für einen Katalysator oder einen Katalysatorfilter zur Abgasreinigung.

## Revendications

1. Composition pour corps moulés par extrusion, se présentant sous l'aspect d'une pâte qui comprend :
a) un matériau inorganique qui durcit à la cuisson ou au frittage,
b) une méthyl-hydroxyéthyl-cellulose dont le degré de substitution DS(méthyle) vaut de 1,50 à 1,90 et le degré de substitution MS(hydroxyéthyle) vaut de 0,30 à 0,90, la somme du DS(méthyle) et du MS(hydroxyéthyle) valant de 2,00 à 2,60,
c) et de l'eau,
et dans laquelle le matériau inorganique est l'un des suivants : aluminate, alumino-silicate, silice-alumine, feldspath, oxyde de titane, verre de silice, nitrure d'aluminium, carbure d'aluminium, kaolin, cordiérite, mullite, argile, bentonite, talc, zircon, zircone, spinelle, carbure de silicium, borure de silicium, nitrure de silicium, dioxyde de titane, carbure de titane, carbure de bore, oxyde de bore, borosilicate, borosilicate de baryum et sodium, silicate, silicate feuilleté, verre sodo-calcique, zéolithe, titanate de baryum, titano-zirconate de plomb, titanate d'aluminium, ferrite de baryum, ferrite de strontium et oxyde de terre rare, ou une combinaison de deux de ces matériaux inorganiques ou plus, laquelle composition ne contient pas de liants hydrauliques, et laquelle composition comprend de 85 à 99,5 % de matériau inorganique (a) et de 0,5 à 15 % de méthyl-hydroxyéthyl-cellulose (b), par rapport au poids total de matériau inorganique (a) et de méthyl-hydroxyéthyl-cellulose (b).

2. Composition conforme à la revendication 1, dans laquelle la méthyl-hydroxyéthyl-cellulose présente un MS(hydroxyéthyle) valant de 0,30 à 0,70.

3. Composition conforme à la revendication 1 ou 2, dans laquelle la somme du DS(méthyle) et du MS(hydroxyéthyle) vaut au moins 2,10.

4. Procédé de fabrication d'un corps moulé par extrusion, comportant les étapes consistant à mélanger un matériau inorganique tel qu'indiqué dans la revendication 1, une méthyl-hydroxyéthyl-cellulose telle qu'indiquée dans l'une des revendications 1 à 3, de l'eau et des adjuvants optionnels, pour en faire une masse extrudable, et à soumettre cette masse extrudable à des opérations de moulage par extrusion, de séchage et de frittage.

5. Corps moulé par extrusion, produit à partir d'une composition conforme à l'une des revendications 1 à 3, à l'état de corps vert.

6. Corps moulé par extrusion, conforme à la revendication 5, présentant une structure de céramique « nid d'abeille ».

7. Utilisation d'un corps moulé par extrusion, conforme à la revendication 5 ou 6, en tant que support de catalyseur, catalyseur, échangeur de chaleur, ou filtre.

8. Utilisation conforme à la revendication 7, en tant que support de catalyseur ou filtre à catalyseur pour traitement de gaz d'échappement.
